# EUROPEAN PATENT SPECIFICATION

(11) **EP 0 601 136 B1**
(45) Date of publication and mention of the grant of the patent: **20.01.1999**
(21) Application number: 93903751.1
(22) Date of filing: 12.02.1993
(51) Int. Cl.: B60N 2/04

(54) **INTERLOCKING SEAT ADJUSTER WITH COMPENSATING LINK**
INEINANDERGREIFENDE SITZVERSTELLVORRICHTUNG MIT KOMPENSATIONSSTANGE
DISPOSITIF DE REGLAGE DE SIEGE A VERROUILLAGE RECIPROQUE ET A ARTICULATION D'EQUILIBRAGE

(30) Priority: 30.06.1992 CA 2072809
(43) Date of publication of application: 15.06.1994
(73) Proprietor: MULTIMATIC INC., Markham, Ontario L3R 5E5 (CA)
(72) Inventor: GRUBER, Rudolf, Claremont, Ontario L1Y 1B1 (CA)
(74) Representative: Kazi, Ilya
(86) International application number: PCT/CA93/00058
(87) International publication number: WO 94/00313

(56) References cited:
- DE-A- 3 643 729
- US-A- 2 942 647
- US-A- 2 980 163
- US-A- 3 006 594
- US-A- 3 022 035
- US-A- 3 037 735
- US-A- 3 149 815

## Description

This invention relates to mechanisms for moving a seat bracket and the seat attached forward and backwards in relation to a frame. Specifically this invention finds application in seats for a vehicle.

A multitude of devices are known in the prior art for moving vehicle seats for and aft in relation to a frame of a vehicle. Most of the assemblies found in the prior art relate to seat tracks upon which the seat bracket and the seat attached thereto are releasably moveable. However these assemblies are heavy in construction and add to the weight of the vehicle unnecessarily.

Further there exists a number of devices for the movement of a seat which generally do not rely on rails to provide the fore and aft movement of the seat but provide pivotable members attached to the seat bracket to move the seat in relation to the frame. Examples of such assemblies are described below.

U.S. Patent 4,807,932 issued on February 28, 1989 to Kia Motors describes a device for moving an automobile seat back and forth including legs pivotable to the frame which moves the seat along an arcuate path.

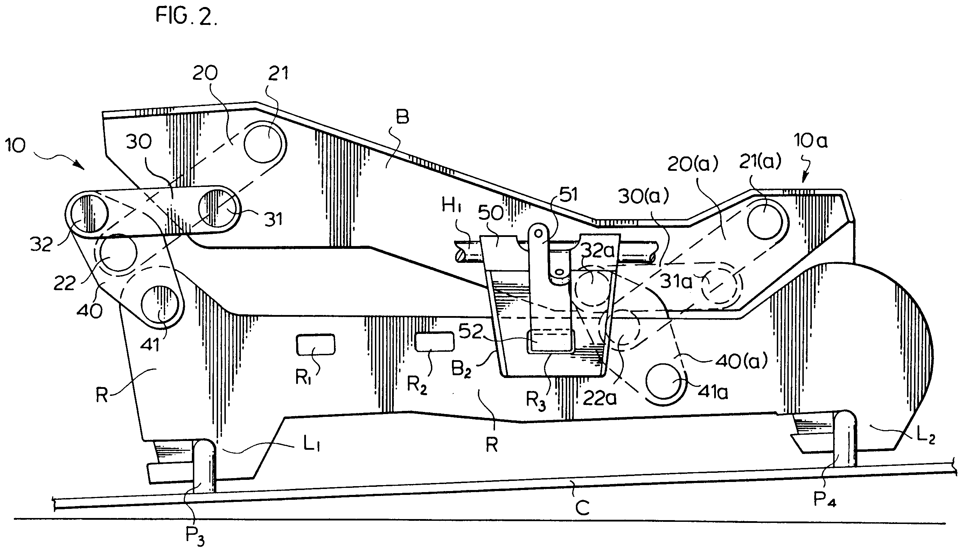

U.S. Patent 4,121,802 issued on October 24, 1978 to Keiper KG describes a device as illustrated in relation to Figure 2 including a linkage operative for vertical movement of the carrier in relation to a base.

PCT Application WO 91/04881 published on April 18, 1991 describes the parallel motion between a seat and a support frame which includes a system of links.

West German Patent Application 4,010,451 published on October 2, 1991 and Assigned to Audi describes the longitudinal motion of a seat by means of a four bar linkage system. The motion of the seat is clearly arcuate as seen in the figures.

West German Patent Application 2,855,293 published on July 3, 1980 to Fichtel & Sachs AG describes a multi-link adjustment member for a seat which purports to provide generally linear motion of the seat.

US-3,006,594 discloses a seat linkage powered by reversible electric motors.

It is a requirement for seat systems that they meet certain minimum requirements such as those found in the FMVSS in the United States and specifically standard numbers 207 and 210. It has therefore been found to be advantageous in order to meet these standards and surpass them to further enhance the aforementioned seat adjustment mechanism with means to interlock a seat bracket with a riser, to provide reinforcement for the link system.

In conducting such tests as described in FMVSS 207 and 210 and when the finished product includes brackets which are manufactured from sheet metal 3mm thick, and links which are 5mm thick and pins which have 16mm diameter it has been found that the loading on the seat structure during the test, as it passes to ground, it passes from the seat bolt to the link and the adjustment latch and then to the riser and then from the riser to the latches to ground. Therefore in testing it has been found the seat system has deformed extensively so that it does not meet FMVSS requirements. It would therefore be advantageous to provide within the seat system means for limiting deformation.

It is therefore an object of a preferred embodiment of the invention to provide a direct path within the seat system by design for resolution of the forces exerted upon the seat system so as to minimize the damage to the operating components of the seat system.

It is a further object of this invention to provide a seat system which is safer for public use.

Nowhere within the prior art is there found a preferably compact adjustment mechanism for a seat which includes a linkage system including a compensating link to compensate for the arcuate motion of the primary links of the mechanism rendering the final longitudinal motion of the seat as substantially linear within the range of motion of the seat.

It is therefore a further object of the preferred embodiments of this invention to provide a seat adjustment mechanism which includes a linkage system moveable within the limits of motion of the seat to a predetermined number of positions wherein the linkage system includes a compensating link to compensate for the arcuate motion of the primary links of the mechanism, during the for and aft movement of the seat, rendering the final longitudinal motion of the seat as substantially linear within the range of motion of the seat. It is particularly advantageous to provide a compact design to minimize the space required for the installation of the assembly.

It is another such object to provide a mechanism which operates silently and requires little lubrication.

It is a further such object to provide a seat adjuster which is lightweight compact and economical to manufacture.

According to the invention there is provided a seat system as set out in Claim 1.

A particular aspect of the invention is set out in Claim 2 and further specified in Claim 4.

The invention will now be illustrated with respect to the following drawings illustrating embodiments of the invention in which:
Figure 1 is a perspective view of a preferred embodiment of the invention installed upon a vehicle.
Figure 2 is a side plan view of the seat adjuster of Figure 1.
Figure 3 is a schematic view of the front end of the seat adjuster of Figure 2.
Figure 4 is an exploded perspective view of the mechanism of Figure 2.
Figure 5 is a perspective view of the mechanism of Figure 2.
Figure 6 is a schematic view of the operative positions of the seat of Figure 1.
Figure 7 is a front plan view of the latching mechanism 50 of Figure 2.
Figure 8 is a similar view to that of Figure 2 which illustrates in a preferred embodiment of the invention the interlocking portions B100 and R100 disposed proximate the rear of the seat system.
Figure 9 is a cross sectional view of the seat bracket B and the riser R of Figure 8 through the line AA illustrating the interlock feature of the seat bracket and riser and the operation thereof.
Figure 10 is a schematic side view which illustrates the seat bracket B including the interlocking portion thereof proximate the rear thereof and illustrated in a preferred embodiment of the invention.
Figure 11 is a schematic side view which illustrates the seat riser including the interlock component R100 illustrated in a preferred embodiment of the invention.
Figure 12 is a perspective view of the end of the riser proximate the interlocking portion R100 illustrated in a preferred embodiment of the invention.

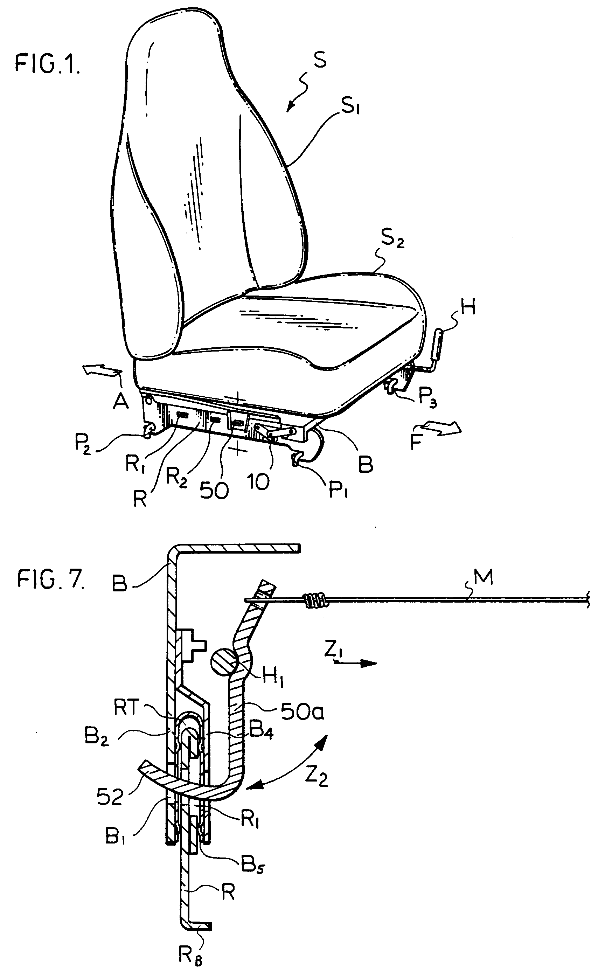

Referring now to Figure 1, there is illustrated in perspective view a vehicle seat S including a seat back S1 and a seat S2. The seat S2 is attached to a seat bracket B which is pivotably engaged with a riser R anchored to the floor of a vehicle. As is the convention with removeable seats for a truck or van, pins P1 and P2 are provided for the latching, via latch mechanisms L1 and L2, of the riser R and therefor the seat S2 to the vehicle. The pins or strikers P1 and P2 are often recessed within opening or wells provided with the floor of a vehicle such as a van.

A seat adjuster 10 is provided at the front and rear and on both sides of the seat S2, to provide the longitudinal for and aft motion of the seat S2 in relation to the stationary riser R in the directions F and A respectively. A resillently biased latching mechanism 50, operative via handle H, in cooperation with openings B1 of the seat bracket and R1, R2 and R3 provided with the riser allow for the motion of the seat to and from these predefined comfort positions.

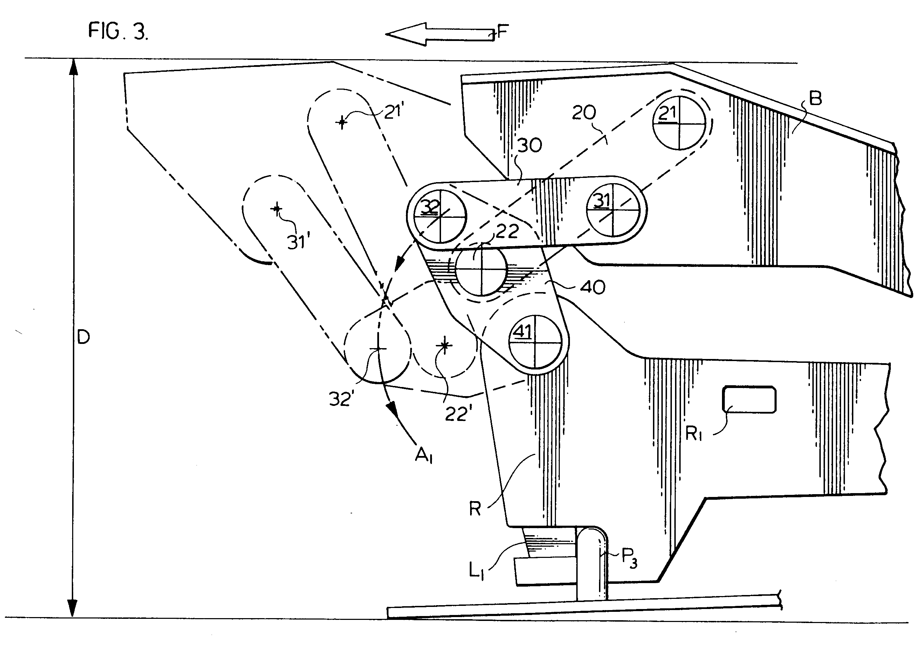

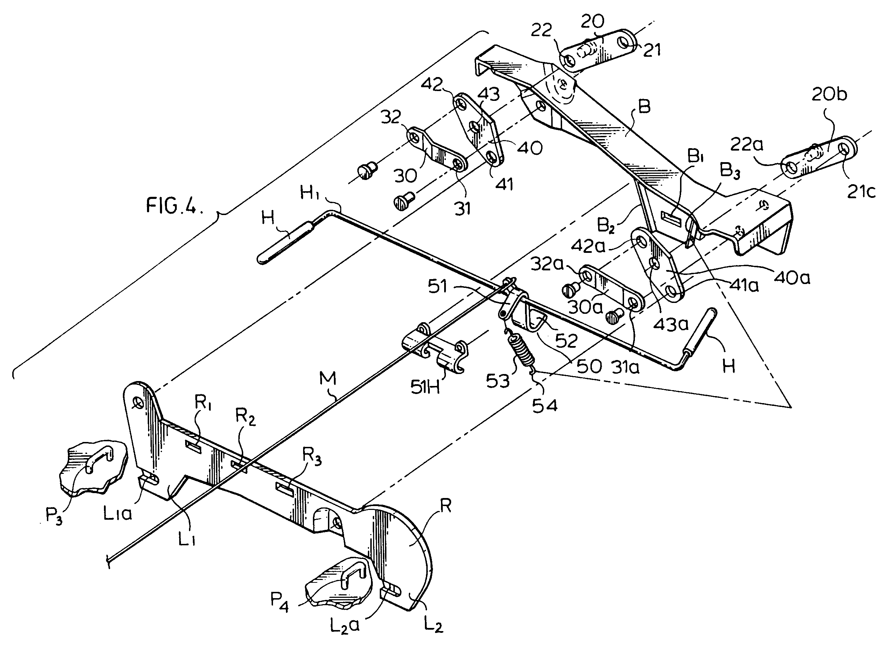

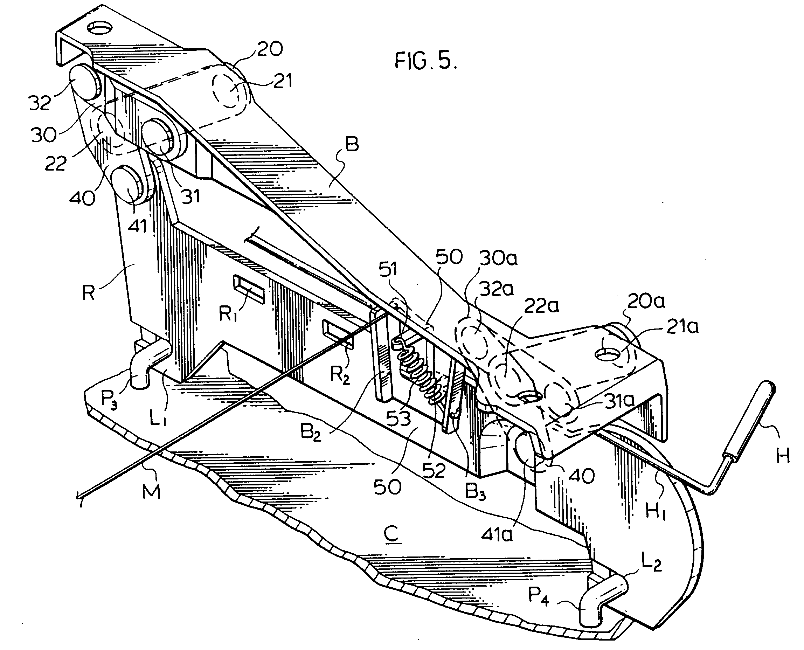

Referring now to Figures 2 and 3, illustrated in side plan view, Figure 4, illustrated in exploded perspective view and Figure 5, illustrated in perspective, the mechanisms 10 and 10a disposed proximate the front and rear of the seat bracket B provide for the substantially linear movement thereof with respect to the riser R via the cooperative pivotal operation of the links 20, 30, and 40 and 20a, 30a, and 40a. The links 40 and 40a pivot from the riser R at pivots 41 and 41a. The links 20 and 20a pivot from the seat bracket B at 21 and 21a respectively and from proximate the center 22 and 22a of link 40 and 40a. The links 30 and 30a pivot from the seat bracket B at 31 and 31a respectively and from proximate the free ends 32 and 32a of link 40 and 40a.

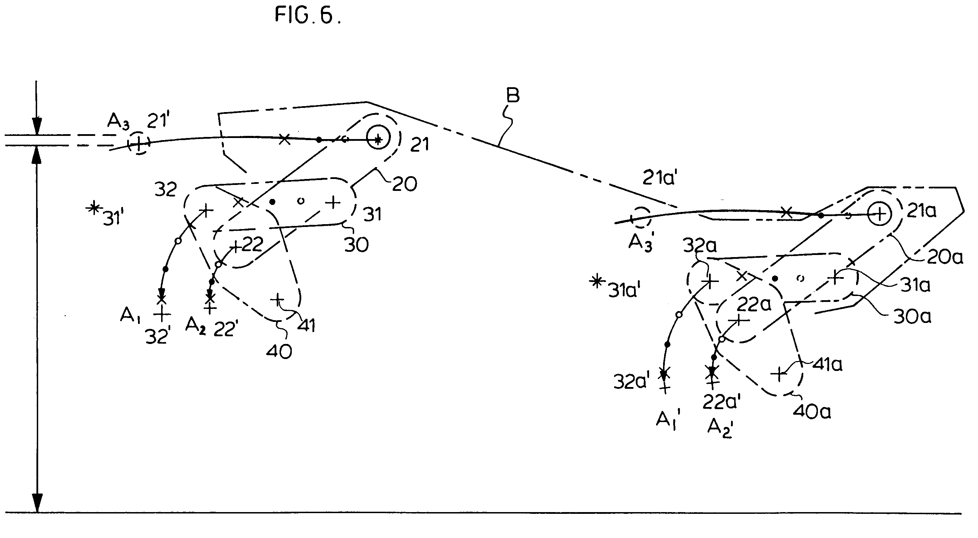

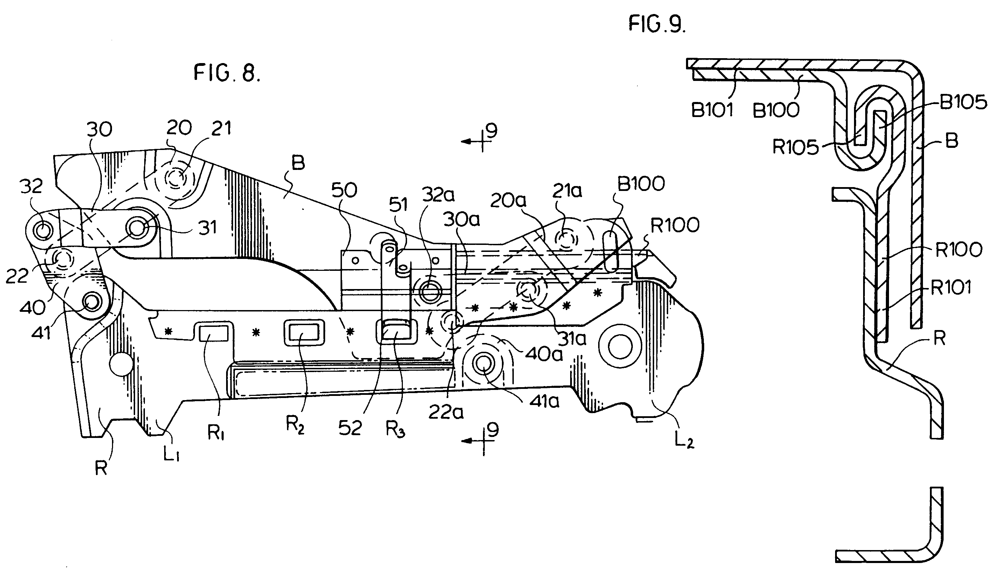

The seat bracket and riser may be formed by conventional stamping techniques or the like, wherein the necessary features such as mounting opening for seat S2, the latch positions R1, R2 and R3, the slotted latch portions L1 and L2, and the openings for the pivots are provided. The supplementary portion B4 (as best seen in Figure 7) of seat bracket B may be affixed with B by conventional methods such as welding, fastening or the like. The latch 50 is resiliently biased via spring 53 and operative via the handle H causing portion H1 of the handle extension to engage near end 51 of the latch 50 and thereby move the detent 52 out of openings B1, and R3 as illustrated and therefore allow motion of the seat in the forward direction F by the operator. As at this juncture the seat bracket B is free to move as urged by an occupant in relation to the stationary riser R, the pairs of links 20, 20a, 30, 30a and 40, 40a will pivot over described cooperative paths, as best seen in Figure 6 which result in the movement of the seat S2 in relation to the floor C of Figure 2 in a substantially linear path. In empirically optimizing the seat adjuster it has been determined that by tracking the movement of the ends of the top links 20 and 30 and providing the shape of compensating link 40 that the seat adjuster 10 will maintain the seat bracket B a substantially constant distance within the range of 2.65 mm during the for and aft movement of the seat. This minimum variation is a direct result of the selection of the dimensions of the links. The largest range provide during the evaluation was 6.38 mm. The following set of readings represents the optimum dimensions to-date.

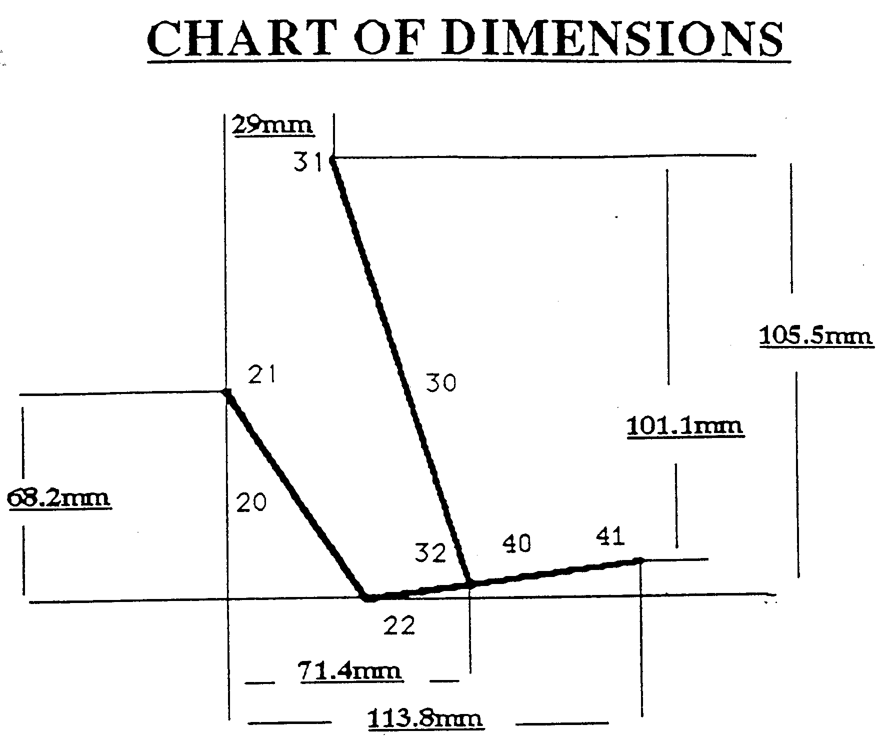

It is the above charted relationships that results in the minimum 2.65mm variation of the seat over its range of movement. The links 20, 30, and 40 are schematically illustrated to depict the distances between there pivots and there free ends. The exact dimensions therefor can be extrapolated by simple trigonometry. The amount of variation allowed therefore depends on the amount of headroom available to the occupant.

The resultant seat adjuster 10 has been found to be considerably lighter (34.2%) than conventional systems and thereby maximizes the weight to strength ratio. Further the links 20 and 30 may be ribbed along their lengths to improve the strength thereof. Link 40 is illustrated as wider than 20 or 30 since it carries the total loading of the system, the center cross section has been increased as it requires extra strength at this juncture than over the rest of its length.

Referring now to Figures 3 and 6 there is schematically illustrated the compensating effect that compensating link 40 has on the movement of the overall seat adjuster 10. For example the top ends 21 and 31 of the two links 20 and 30 in use would move in an arcuate upward and forward motion during the forward motion of the seat S2, and in an arcuate downward and rearward motion during the rearward movement of the seat S2. To compensate for this arcuate motion, which would alter the head room of an occupant if uncompensated for as the seat S2 is moved within its range of longitudinal motion, the two compensating links 40 and 40a move in a downward and forward compensating arcuate motion during the forward movement of the seat S2 and in an upward and rearward compensating arcuate motion during the rearward movement of the seat S2 thereby compensating for the motion of the two links 20 and 30 and rendering the motion of the seat bracket B in relation to the riser R by maintaining the seat bracket B in a substantially constant parallel position with respect to the riser R throughout the range of movement of said seat bracket B so that there is no appreciable arcuate movement thereof but a substantially linear movement of said seat bracket B in relation to the riser R. As can be observed in relation to Figures 3 and 6 ends 22 and 22a of links 20 and 20a move along the arcuate paths A2 and A2' as the compensating links 40 and 40a pivot upon their pivots 41 and 41a attached with the riser R. Similarly ends 32 and 32a of links 30 and 30a move along the arcuate paths A1 and A1' as the compensating links 40 and 40a pivot upon their pivots 41 and 41a attached with the riser R. The resultant effect upon the ends 21, 21a and 31 and 31a is a compensation of their known arcuate movements resulting in them adopting the positions 21', 21a', 31' and 31a' which are disposed a maximum of 2.65mm from a perfect horizontal line extending through points 21, 21a, 31, and 31a respectively. Therefore the motion of the seat S2 attached to the seat bracket B in relation to the stationary riser R may be said to be substantially linear within the range of motion of the seat.

Referring now to Figures 2, 4, and 7, (illustrated in close-up front plan view) the assembly for the latch 50 which is fixed with the bracket B via portion 51H as illustrated. The pawl is resiliently biased by spring 53 fixed at end 54 with the bracket portion B3. Movement therefore of the handle H and hence portion H1 moves the pawl 50a laterally away from the openings B1 and R1 allowing end 52 to clear the openings and allow unencumbered movement of the seat bracket B in relation to the riser R as can be seen in Figure 7 seat bracket B includes portions B2 and B4 which surround the top of the riser RT which assists in the lateral and longitudinal tracking of the seat bracket B in relation to the riser R and minimizes any play in the seat adjuster. Also it is recommended that the compensating link be pivoted from the riser rather than reversing the assembly as illustrated since and pivoting the compensating link from the seat bracket and the other two links from the riser since more play is introduced into the system which must be compensated for.

Those skilled in the art will appreciate that many modifications can be made to the seat adjuster described herein. Any system of linkages used as a seat adjuster utilizing the aspect of a compensating member which compensates for the arcuate motion of the system if left uncompensated would fall within the scope of this invention.

In order to meet the FMVSS 207 and 210 and surpass the standards it has been found by Applicant that it is preferred to provide interlocking portions between the seat bracket and the riser which interlock and thereby provide a direct load path from the seat frame to the attachment bolts of the seat system as best seen in Figure 2 at P3 and P4.

It is been found in a preferred embodiment when using 3mm thick sheet metal to manufacture the brackets from a stamping process and 5mm thick links and 16mm diameter pins, that in subjecting that seat system to the test required by FMVSS 207 and 210 or the like or to the standards of a motor vehicle manufacturer which normally surpass the aforementioned federal standards, that a total force combined pull of 20,000 pounds is subjected upon the seat system. This assumes that the seat system is for a three passenger seat such as that found within a mini van. The details of these tests are found in the standards and the reader is referred to these standards for more detailed information in the manner which these tests are performed. Further with regard to the seatbelts the diagrams in the standards clearly point out the directions, magnitude, and angles of the forces. The teachings of these two standards are hereby incorporated by reference in relation to the manner in which the test are established.

As described in the background of the invention it has been determined that when testing to surpass such loading it is preferred to provide a load path directly from the seat frame to the attachment bolts P3 and P4. To do so an interlocking system has been invented so as to ensure that the load will pass to P3 and P4 when the latching mechanisms are founded in the position R2 and R3 as seen in Figure 8.

In providing this interlocking feature the structure at 100% of the required FMVSS loading for code standards 207 and 210 resulted in no significant deformation to the system. In fact with the new interlocking portions testing was conducted up to 40% above the loading required by the FMVSS standards. It is estimated this will result in an 30% improvement in the overall safety of the seat system in a vehicle.

Referring now to Figure 8 there is found a view identical to that of Figure 2 with the exception that the seat system including the riser and the seat bracket incorporates proximate the rear thereof interlocking portions B100 with respect to the seat bracket B and R100 with respect to the riser R. All other descriptions of the components of Figure 8 remain identical. The interlocking portions B100 and R100 interlock as best seen in Figure 9 within the range of motion between positions R2 and R3. However in another embodiment the interlocking portions B100 and R100 may be extended so as to provide interlocking through the full range of motion R1, R2 and R3 of the seat assembly. This was not done in this example since the links 20, 30 and 40 extend substantially in a straight line and become reinforcing members themselves when the seat mechanism is adjusted to the position R1. However extending the interlock to the position R1 would be advantageous over the present described embodiment. To do so would merely require additional material and the description provided more than adequately describes the advantages of the system.

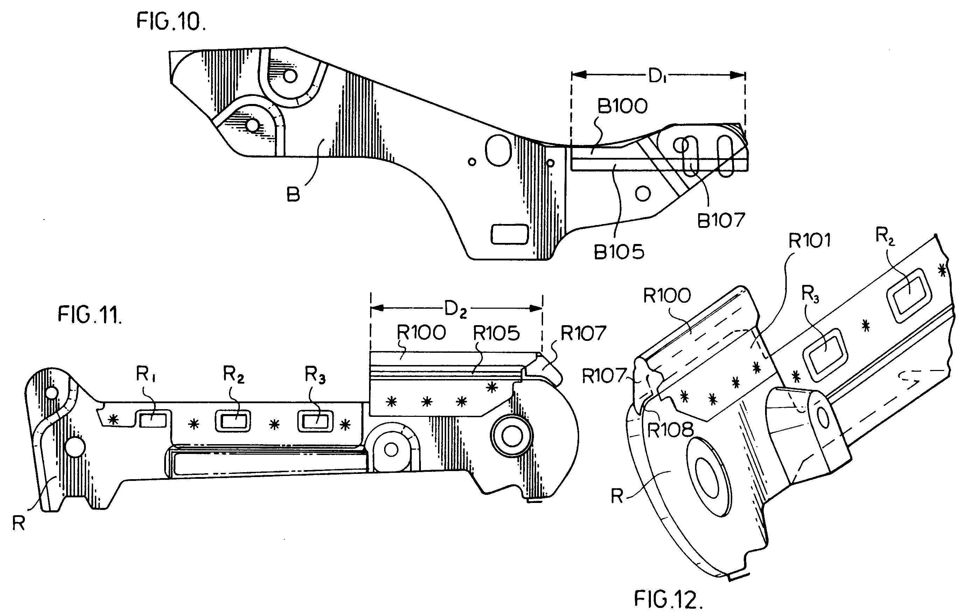

Referring now to Figure 9 there is illustrated in cross section the riser R having the interlocking portion R100 welded thereto or otherwise fastened proximate the top thereof at R100. A substantially U shaped channel portion R105 is therefore provided proximate the top of portion R100. Further the seat bracket B includes a supplementary interlocking portion B100 welded thereto at B101 which includes a substantially U shaped interlocking portion B105 which rides within the opening provided by the substantially U shaped interlocking portion R105 of the riser R. Therefore as can be seen both portions B105 and R105 ride within the complementary U shaped channels provided by the other portions until such time a loading is exerted upon the system wherein the interlocking portions B105 and R105 will engage proximate the adjacent edges thereof and the ends thereof and will provide a direct path for the load to extend to the pins P3 and P4 as best seen in Figure 2. As best seen in Figures 10 and 11 the interlocking portions in this embodiment only exist between the positions R2 and R3 of the seat assembly.

Referring now to Figure 10 there is illustrated in schematic form the seat bracket B having the interlocking component B100 provided therewith which component includes the substantially hooked shape portion B105 and reinforcing rib B107 located proximate the rear thereof to increase the bending stiffness near the rear of the seat bracket B when subjected to a load, since this position is the portion of highest loading for the seat system.

Referring now to Figure 11 there is provided with riser R having operating position R1, R2 and R3 the interlocking portion R100 which includes the hooked shaped portion R105 and the reinforcing portion R107 provided for the same reason as that stated in relation to B107 of Figure 10. The distance D2 over which the portion R100 extends cooperates with the distance D1 of Figure 10 for portion B100 so that the portions interlock over the same distance of adjustment.

Referring now to Figure 12 there is a illustrated a closer perspective view of the portion R100 and R107 specifically of the riser portion R. The portion R107, as indicated in relation to the ribs B107 represents the point of highest loading for the seat system and therefore this portion R107 represents a portion of the hook portion R105 of Figure 9 which is further extended proximate the end of the seat riser R which is turned over upon itself and welded to the riser R at R108 so as to reinforce the interlocking portion R105 of the riser portion R100.

These additions described in a relations to Figure 8 through 12 complement the seat structure of Figures 1 through 7 by providing interlocking portions B105 and R105 which interlock when subjected to the loading normally experienced during an incident with a vehicle. Such interlocking portions therefore create a direct load path for the passage of forces through to the pins P2 and P4 in a seat system. In doing so considerably less forces are exerted on the links 20, 30 and 40 and 20a, 30a and 40a of the seat mechanism as well as the adjuster mechanism 50.

As many changes can be made to the preferred embodiments of the invention if not departing from the scope of the invention as defined in the independent claims.; it is intended that all material contained herein be interpreted as illustrative of the invention and not in a limiting sense.

## Claims

1. A seat system comprising a vehicle frame, or a riser (R) for attachment to a vehicle frame, and a seat bracket (B) movably affixed in relation to said frame or riser, the seat system having means to move the seat bracket (B) to and from a fore and aft position longitudinally in relation to said frame or riser (R), wherein the means to move comprises a linkage system for providing the longitudinal movement of the seat bracket including at least two links (20,30) for moving the seat bracket fore and aft and at least one compensating means (40) for compensating for the substantially arcuate motion of the at least two links (20, 30) of the linkage system of the seat bracket, the cooperative motion of the at least one compensating means (40) rendering the movement of the linkage system and the seat bracket as substantially linear within the range of movement of the seat bracket, the frame or rise (R) having first interlocking means (R100) to interlock with interlocking means of the seat bracket over the longitudinal motion of the seat bracket, the seat bracket having second interlocking means (B100) to interlock with interlocking means of the frame or riser over the longitudinal motion of the seat bracket, wherein the first and second interlocking means have mutually adjacent portions (R105,B105) which normally permit said longitudinal motion but are arranged to interengage and contact when the system is subjected to the loading experienced during an accident to provide a direct path to the vehicle frame or riser for any forces exerted upon the seat system during the accident while minimizing any forces exerted on the means to move the seat bracket to and from a fore and aft position in relation to the frame, during the accident.

2. The seat system of Claim 1 characterised in that the at least two links (20, 30) in use move in an arcuate upward and forward motion during the forward motion of the seat bracket, and in an arcuate downward and rearward motion during the rearward movement of the seat bracket and to compensate for this arcuate motion, which would alter the head room of an occupant if uncompensated for as the seat bracket is moved within its range of longitudinal motion, the compensating means being a link (40) moves in a downward and forward compensating arcuate motion during the forward movement of the seat bracket and in an upward and rearward compensating arcuate motion during the rearward movement of the seat bracket thereby compensating for the motion of the at least two links (20, 30) and rendering the motion of the seat bracket in relation to the stationary frame or riser by maintaining the seat bracket in a substantially constant parallel position with respect to the frame throughout the range of movement of said seat bracket so that there in no appreciable arcuate movement but a substantially linear movement of said seat bracket in relation to the frame.

3. The seat system of Claim 1 or 2 characterised in that said means to move the seat bracket to and from a fore and aft position longitudinally is moveable, for example pivotable, within the limits of motion of the seat bracket between a predetermined number of positions.

4. A system for providing linear movement of a vehicle seat comprising a seat bracket (B), having a seat (S) disposed therewith in use, for the attachment to a vehicle frame or riser (R), each of the seat bracket and the riser having a front and rear, top and bottom; the seat bracket (B) being located substantially on top of said riser (R) in use; and wherein at least two first links (30, 30a) are pivotally engaged with said seat bracket, one of said at least two first links (30) being connected proximate the front of the seat bracket and the other of said at least two first links (30a) being connected proximate the rear of said seat bracket; at least two second longer links (20, 20a) being longer than said first links, and pivotally engaged with said seat bracket, one of said at least two second links (20) being pivotally connected proximate the front of said seat bracket but offset towards the rear and towards the top of the seat bracket in relation to the pivot of the first link, and the other of said at least two second links (20a) being pivotally connected proximate the rear of said bracket but offset towards the front and towards the top of the seat bracket in relation to the pivot of the first link, said at least two first (30, 30a) and second (20, 20a) links being pivotally interconnected with at least two compensating third links (40, 40a) pivotally connected with the front and rear of the riser, the at least two first links (30, 30a) being interconnected with the at least two compensating third links (40, 40a) proximate the free end of the at least two compensating third links (40, 40a) respectively, the at least two second links (20, 20a) being interconnected with the at least two compensating third links (40, 40a) intermediate the free ends of the at least two compensating third links (40, 40a) and pivoting ends of the at least two compensating third links (40, 40a) connected with the riser respectively, the at least two first (30, 30a) and second (20, 20a) links providing the longitudinal for and aft motion of seat bracket in relation to the riser, the at least two compensating third links (40, 40a) compensating for the arcuate motion of the at least two first (30, 30a) and second links (20, 20a) maintaining the seat bracket in a substantially constant parallel position with respect to the riser throughout the range of movement of said seat bracket so that there is no appreciable arcuate movement but a substantially linear movement of said seat bracket in relation to the riser, the riser having first interlocking means (R100) to interlock with interlocking means of the seat bracket over the longitudinal motion of the seat bracket, the seat bracket having second interlocking means (B100) to interlock with interlocking means of the riser over the longitudinal motion of the seat bracket, wherein the first and second interlocking means have mutually adjacent portions (R105, B105) which normally permit said longitudinal motion but are arranged to interengage and contact when the system is subjected to the loading experienced during an accident to provide a direct path to the vehicle frame for any forces exerted upon the seat system during an accident while minimizing any forces exerted on said first (30, 30a), second (20, 20a) and compensating links (40, 40a) during the accident.

5. The system of Claim 4 characterised in that the top ends of the at least two first (30, 30a) and second (20, 20a) links in use move in an arcuate upward and forward motion during the forward motion of the seat, and in an arcuate downward and rearward motion during the rearward movement of the seat; to compensate for this arcuate motion, which would alter the head room of an occupant if uncompensated for as the seat is moved within its range of longitudinal motion, the at least two compensating third links (40, 40a) move in a downward and forward compensating arcuate motion during the forward movement of the seat and in an upward and rearward compensating arcuate motion during the rearward movement of the seat thereby compensating for the motion of the at least two first (30, 30a) and second (20, 20a) links and rendering the motion of the seat bracket in relation to the frame by maintaining the seat bracket in a substantially constant parallel position with respect to the riser throughout the range of movement of said seat bracket so that there is no appreciable arcuate movement but a substantially linear movement of said seat bracket in relation to the riser.

6. The system of Claim 4 or 5 characterised in that the riser further comprises integral detent portions (R1, R2, R3) disposed proximate the top thereof to fasten the seat bracket in relation to the riser at various detent positions in relation thereto, the seat bracket including latching means (50) which releasably engages the latching portions of the riser as the seat is moved to and from alternative comfort positions.

7. The system of Claim 6 characterised in that the seat bracket and or the riser further comprises portions disposed proximate the bottom of the seat bracket and or the top of the riser which engages with one another and provide resistance to lateral forces tending to move the bracket laterally in relation to the riser and assist in guiding the bracket in relation to the riser longitudinally.

8. The system of Claim 7 characterised in that the portions are downwardly extending flanges (B100) of the seat bracket which surround the top of the riser (R105) and further assist in guiding the longitudinal motion of the seat bracket in relation to the riser.

9. The system of Claim 8 characterised in that the latching means when latched simultaneously extending through openings in the riser and aligned opening extending through the seat bracket.

10. The system of any of Claims 4 to 9 characterised in that the riser further comprises an integral latching portion (P1, P2, P3, P4) proximate the bottom thereof to fasten the riser, the seat bracket and the seat in use to floor latching portions.

11. The system of any preceding claim wherein the first and second interlocking means are displaceable relative to each other until a loading is exerted upon the system.

## Patentansprüche

1. Sitzsystem mit einem Fahrzeugrahmen oder einer Erhöhungsvorrichtung (R) zur Befestigung an einem Fahrzeugrahmen, sowie einem Sitzträger (B), der beweglich in Hinsicht auf den Rahmen oder die Erhöhungsvorrichtung befestigt ist, wobei das Sitzsystem eine Einrichtung hat, um den Sitzträger (B) aus einer und in eine vordere und hintere Position zu bewegen und zwar in Längsrichtung hinsichtlich des Rahmens oder der Erhöhungsvorrichtung (R), wobei die Bewegungseinrichtung ein Verbindungs- bzw. Stangensystem zur Zurverfügung-stellung der Längsbewegung des Sitzträgers umfaßt mit mindestens zwei Verbindungselementen bzw. Stangen (20, 30) zum Bewegen des Sitzträgers nach vorne und nach hinten und mindestens einer Kompensationseinrichtung (40) zum Kompensieren der im wesentlichen bogenförmigen Bewegung der mindestens zwei Verbindungselemente (20, 30) des Verbindungssystems des Sitzträgers, wobei die zusammenwirkende Bewegung mindestens einen Kompensationseinrichtung (40) die Bewegung des Verbindungssystems und des Sitzträgers innerhalb des Bereiches der Bewegung des Sitzträgers im wesentlichen linear macht, wobei der Rahmen oder die Erhöhungsvorrichtung (R) eine erste Sperreinrichtung (R100) hat, die mit Sperreinrichtungen des Sitzträgers über die Längsbewegung des Sitzträgers sperrt, wobei den Sitzträger eine zweite Sperreinrichtung (B100) hat, die mit der Sperreinrichtung des Rahmens oder der Erhöhungsvorrichtung über die Längsbewegung des Sitzträgers sperrt, wobei die erste und die zweite Sperreinrichtung gegenseitig benachbarte Abschnitte (R105, B105) aufweisen, welche normalerweise die Längsbewegung gestatten, aber so angeordnet sind, daß sie miteinander in Eingriff und in Kontakt kommen, wenn das System der Belastung unterzogen wird, die es während eines Unfalls erfährt, um einen direkten Weg zum Fahrzeugrahmen oder zur Erhöhungsvorrichtung für jedwede Kräfte bereitzustellen, die während des Unfalls auf das Sitzsystem ausgeübt werden, während jedwede Kräfte minimiert werden, die auf die Einrichtung zur Bewegung des Sitzträgers und von einer vorderen und einer hinteren Position hinsichtlich des Rahmens während des Unfalls ausgeübt werden.

2. Sitzsystem nach Anspruch 1, dadurch gekennzeichnet, daß die mindestens zwei Verbindungselemente (20, 30) sich bei der Verwendung in einer bogenförmigen, nach oben und vorwärts gerichteten Bewegung während der Vorwärtsbewegung des Sitzträgers, und in einer bogenförmigen, nach unten und hinten gerichteten Bewegung während der Rückwärtsbewegung des Sitzträgers bewegen, und daß zur Kompensierung dieser bogenförmigen Bewegung, welche -den Kopfraum eines Sitzenden verändern würde, wenn sie unkompensiert bliebe, wenn der Sitzträger sich im Bereich seiner Längsbewegung bewegt, die Kompensationseinrichtung, die ein Verbindungselement (40) ist, sich in einer nach unten und nach vorne gerichteten bogenförmigen Kompensationsbewegung während der Vorwärtsbewegung des Sitzträgers bewegt, und in einer nach oben und nach hinten gerichteten bogenförmigen Kompensationsbewegung während der Rückwärtsbewegung des Sitzträgers, wodurch die Bewegung der mindestens zwei Verbindungselemente (20, 30) kompensiert wird und die Bewegung des Sitzträgers im Verhältnis zum stationären Rahmen oder zur Erhöhungsvorrichtung dadurch umgestaltet wird, daß der Sitzträger in einer im wesentlichen konstanten, parallelen Position hinsichtlich des Rahmens gehalten wird, und zwar über den Bewegungsbereich des Sitzträgers, so daß keine merkliche bogenförmige Bewegung stattfindet, sondern eine im wesentlichen lineare Bewegung des Sitzträgers im Verhältnis zum Rahmen.

3. Sitzsystem nach Anspruch 1 oder 2, dadurch gekennzeichnet, daß die Einrichtung zur Bewegung des Sitzträgers in eine und aus einer vorderen und hinteren Position in Längsrichtung beweglich, beispielsweise schwenkbar, innerhalb der Bewegungsgrenzen des Sitzträgers zwischen einer vorbestimmten Anzahl von Stellungen ist.

4. System zur Zurverfügungstellung einer linearen Bewegung eines Fahrzeugsitzes mit einem Sitzträger (B) mit einem Sitz (S), der bei der Verwendung zur Befestigung an einem Fahrzeugrahmen oder einer Erhöhungsvorrichtung (R) mit dieser vorgesehen ist, wobei der Sitzträger und die Erhöhungsvorrichtung jeweils eine Vorder- und Rückseite sowie ein Oberteil und ein Unterteil haben; wobei der Sitzträger (B) im wesentlichen bei der Verwendung am Oberteil der Erhöhungseinrichtung (R) angeordnet ist; und wobei mindestens zwei erste Verbindungselemente bzw. -stangen (30, 30a) schwenkbar mit dem Sitzträger im Eingriff sind, wobei eines der mindestens zwei ersten Verbindungselemente (30) in der Nähe des Vorderteils des Sitzträgers verbunden ist und das andere der mindestens zwei ersten Verbindungselemente (30a) in der Nähe des hinteren Teils des Sitzträgers verbunden ist; wobei mindestens zwei zweite längere Verbindungselemente bzw. -Stangen (20, 20a), die länger sind als die ersten Verbindungselemente, schwenkbar mit dem Sitzträger im Eingriff sind, wobei mindestens eines der beiden zweiten Verbindungselemente (20) schwenkbar in der Nähe der Vorderseite des Sitzträgers verbunden ist, aber nach rückwärts und in Richtung des Oberteils des Sitzträgers in Bezug auf die Anschwenkung des ersten Verbindungselements versetzt ist, und wobei das andere der mindestens zwei zweiten Verbindungselemente (20a) schwenkbar in der Nähe des hinteren Teils verbunden ist, aber in Richtung der Vorderseite und in Richtung des Oberteils des Sitzträgers versetzt, und zwar in Bezug auf die Anschwenkung des ersten Verbindungselements, wobei mindestens zwei erste (30, 30a) und zweite (20, 20a) Verbindungselemente schwenkbar mit mindestens zwei dritten Kompensations-Verbindungselementen bzw. -Stangen (40, 40a) verbunden sind, welche schwenkbar mit dem Vorderteil und dem hinteren Teil der Erhöhungseinrichtung verbunden sind, wobei mindestens zwei erste Verbindungselemente (30, 30a) mit den mindestens zwei dritten Kompensations-Verbindungselementen in der Nähe des freien Endes der mindestens zwei dritten Kompensations-Verbindungselemente (40,41) jeweils verbunden sind, wobei die mindestens zwei zweiten Verbindungselemente (20, 20a) mit den mindestens zwei dritten Kompensations-Verbindungselementen (40, 40a) zwischen den freien Enden der mindestens zwei dritten Kompensations-Verbindungselemente (40, 40a) und den Schwenkendendermindestenszwei dritten Kompensations-Verbindungselemente (40, 40a) verbunden sind, die jeweils mit der Erhöhungsvorrichtung verbunden sind, wobei die mindestens zwei ersten (30, 30a) und zweiten (20, 20a) Verbindungselemente für die längs-Vor- und -Rückbewegung des Sitzträgers in Bezug auf die Erhöhungsvorrichtung sorgen, wobei mindestens zwei dritte Kompensations-Verbindungselemente (40, 40a) die bogenförmige Bewegung der mindestens zwei ersten (30, 30a) und zweiten (20, 20a) Verbindungselemente kompensieren und den Sitzträger in einer im wesentlichen konstanten parallelen Position in Hinsicht auf die Erhöhungsvorrichtung halten, und zwar über den gesamten Bewegungsbereich des Sitzträgers, so daß keine merkliche bogenförmige Bewegung stattfindet, sondern eine im wesentlichen lineare Bewegung des Sitzträgers bezüglich der Erhöhungsvorrichtung, wobei die Erhöhungsvorrichtung eine erste Sperreinrichtung (R100) aufweist, die mit einer Sperreinrichtung des Sitzträgers über die Längsbewegung des Sitzträgers sperrt, wobei der Sitzträger eine zweite Sperreinrichtung (B100) aufweist, die mit der Sperreinrichtung der Erhöhungsvorrichtung über die Längsbewegung des Sitzträgers sperrt, wobei die erste und zweite Sperreinrichtung gegenseitig benachbarte Abschnitte (R105, B105) haben, welche normalerweise die Längsbewegung gestatten, aber so angeordnet sind, daß sie miteinander in Eingriff und Kontakt kommen, wenn das System der Belastung unterzogen wird, die es während eines Unfalls erfährt, um einen direkten Weg zum Fahrzeugrahmen für jedwede Kräfte bereitzustellen, die während eines Unfalls auf das Sitzsystem ausgeübt werden, während jedwede Kräfte, die während des Unfalls auf die ersten (30, 30a), zweiten (20, 20a) und die Kompensationsverbindungselemente (40, 40a) ausgeübt werden, minimiert werden.

5. System nach Anspruch 4, dadurch gekennzeichnet, daß sich die oberen Enden der mindestens zwei ersten (30, 30a) und zweiten (20, 20a) Verbindungselemente bei der Verwendung während der Vorwärtsbewegung des Sitzes in einer gebogenen, nach oben und vorwärts gerichteten Bewegung bewegen und während der Rückwärtsbewegung des Sitzes in einer bogenförmigen nach unten und nach hinten gerichteten Bewegung; wobei zur Kompensation dieser bogenförmigen Bewegung, welche den Kopfraum eines Sitzenden verändern würde, wenn sie umkompensiert bliebe, wenn der Sitz in seinem Längsbewegungsbereich bewegt wird, die mindestens zwei dritten Kompensations-Verbindungselemente (40, 40a) sich in einer nach unten und vorwärts gerichteten bogenförmigen Kompensationsbewegung während der Vorwärtsbewegung des Sitzes bewegen, und in einer nach oben und nach hinten gerichteten bogenförmigen Kompensationsbewegung während der Rückwärtsbewegung des Sitzes, wodurch die Bewegung der mindestens zwei ersten (30, 30a) und zweiten (20, 20a) Verbindungselemente kompensiert wird und die Bewegung des Sitzträgers in Bezug auf den Rahmen durch das Halten des Sitzträgers in einer im wesentlichen konstanten parallelen Position hinsichtlich der Erhöhungsvorrichtung über dem Bewegungsbereich des Sitzträgers -umgewandelt wird, so daß keine merkliche bogenförmige Bewegung stattfindet, sondern eine im wesentlichen lineare Bewegung des Sitzträgers in Bezug auf die Erhöhungsvorrichtung.

6. System nach Anspruch 4 oder 5, dadurch gekennzeichnet, daß die Erhöhungsvorrichtung ferner integrale Arretierungsabschnitte (R1, R2, R3) aufweist, die in der Nähe ihres Oberteils angeordnet sind, um den Sitzträger in Bezug auf die Erhöhungsvorrichtung bei verschiedenen Arretierungspositionen in Relation hierzu zu befestigen, wobei der Sitzträger eine Rasteinrichtung (50) umfaßt, welche die Rastabschnitte der Erhöhungsvorrichtung lösbar in Eingriff nimmt, wenn der Sitz in und aus alternativen Komfortpositionen bewegt wird.

7. System nach Anspruch 6, dadurch gekennzeichnet, daß der Sitzträger und/oder die Erhöhungsvorrichtung ferner Abschnitte umfaßt, die in der Nähe des Unterteils des Sitzträgers oder des Oberteils der Erhöhungsvorrichtung angeordnet sind, und welche einander in Eingriff nehmen und einen Widerstand gegenüber seitlichen Kräften bieten, die dazu neigen, den Träger seitlich in Bezug auf die Erhöhungsvorrichtung zu bewegen, und die dabei helfen, den Träger in Bezug auf die Erhöhungsvorrichtung in Längsrichtung zu führen.

8. System nach Anspruch 7, dadurch gekennzeichnet, daß die Abschnitte sich nach unten erstreckende Flansche (B100) des Sitzträgers sind, welche das Oberteil der Erhöhungsvorrichtung (R105) umgeben und ferner dabei helfen, die Längsbewegung des Sitzträgers in Bezug auf die Erhöhungsvorrichtung zu führen.

9. System nach Anspruch 8, dadurch gekennzeichnet, daß die Rasteinrichtungen, wenn sie gleichzeitig verrastet werden, sich durch Öffnungen in der Erhöhungsvorrichtung und durch ausgerichtete Öffnungen erstrecken, welche sich durch den Sitzträger erstrecken.

10. System nach einem der Ansprüche 4 bis 9, dadurch gekennzeichnet, daß die Erhöhungsvorrichtung ferner einer integralen Rastabschnitt (P1, P2, P3, P4) in der Nähe ihres Unterteils zur Befestigung der Erhöhungseinrichtung, des Sitzträgers und des Sitzes an Bodenrastabschnitten bei der Verwendung aufweist.

11. System nach einem der vorhergehenden Ansprüche, bei dem die ersten und zweiten Sperreinrichtungen relativ zueinander versetzbar sind, bis eine Belastung auf das System ausgeübt wird.

## Revendications

1. Système de siège comprenant un châssis de véhicule, ou un montant (R) pour la fixation sur un châssis de véhicule, et une console de siège (B) fixée de façon mobile par rapport au châssis ou montant (R), le système de siège comportant des moyens pour déplacer la console de siège (B) sur ou à partir d'une position avant et d'une position arrière longitudinalement par rapport au châssis au montant (R), dans lequel les moyens pour le déplacement comprennent un système d'articulation pour assurer le mouvement longitudinal de la corsole de siège incorporant au moins deux articulations (20, 30) pour déplacer la console de siège a l'avant et à l'arrière, et au moins un moyen de compensation (40) pour compenser le mouvement sensiblement arqué d'au moins deux articulations (20,30) du système d'articulation de la console de siège, le mouvement coopérant d'au moins un moyen de compensation (40) rendant le mouvement du système d'articulation et de la console de siège sensiblement linéaire à l'intérieur de la plage de mouvement de la console de siège, le châssis ou montant (R) comportant des premiers moyens de verrouillage réciproque (R100) pour le verrouillage avec les moyens de verrouillage de la console de siège pendant le mouvement longitudinal de la console de siège, la console de siège comportant des seconds moyens de verrouillage réciproque (B100) pour le verrouillage avec les moyens de verrouillage du châssis ou montant pendant le mouvement longitudinal de la console de siège, système de siège dans lequel les premiers et seconds moyens de verrouillage réciproque ont des portions contiguës entre elles (R105, B105) qui permettent normalement le mouvement longitudinal mais sont aptes à coopérer et entrer en contact entre elles lorsque le système est soumis aux contraintes subies au cours d'un accident pour assurer au châssis de véhicule ou au montant une course directe pour toute force exercée sur le système de siège pendant l'accident, tout en réduisant toute force exercée sur les moyens pour déplacer la console de siège sur/et à partir d'une position avant et d'une position arrière, par rapport au châssis, pendant l'accident.

2. Système de siège selon la revendication 1, caractérisé en ce qu'au moins deux articulations (20, 30) en utilisation se déplacent selon un mouvement arqué vers le haut et vers l'avant au cours du mouvement avant de la console de siège et dans un mouvement arqué vers le bas et vers l'arrière au cours du mouvement vers l'arrière de la console de siège et pour compenser ce mouvement arqué qui modifierait l'espace en hauteur d'un occupant s'il n'était pas compensé étant donné que la console de siège se déplace dans sa plage de mouvement longitudinal, les moyens de compensation étant une articulation (40) qui se déplace dans un mouvement arqué de compensation vers le bas et vers l'avant au cours du mouvement avant de la console de siège et dans un mouvement arqué d'une compensation vers le haut et vers l'arrière au cours du mouvement vers l'arrière de la console de siège, compensant ainsi le mouvement d'au moins deux articulations (20, 30) et rendant le mouvement de la console de siège par rapport au châssis fixe ou montant en maintenant la console de siège dans une position parallèle sensiblement constante par rapport au châssis sur toute la plage de mouvement de la console de siège, afin qu'il n'y ait pas de mouvement arqué sensible, mais un mouvement sensiblement linéaire de la console de siège par rapport au châssis.

3. Système de siège selon la revendication 1 ou 2? caractérisé en ce que les moyens pour déplacer la console de siège sur/et à partir d'une position avant et arrière longitudinalement sont mobiles, par exemple pivotants, dans les limites de mouvements de la console de siège entre un membre de position prédéterminée.

4. Système pour assurer le mouvement linéaire d'un siège de véhicule comprenant une console de siège (B) avec un siège (S) disposé avec celle-ci dans l'utilisation pour la fixation sur un châssis de véhicule ou montant (R), chacun de la console de siège et du montant ayant une partie avant et arrière, une partie supérieure et inférieure; la console de siège (B) étant positionnée sensiblement au sommet du montant dans l'utilisation; et dans lequel au moins les deux premières articulations (30, 30a) coopèrent de façon pivotante avec la console de siège, au moins l'une des deux premières articulations (30) étant raccordée à proximité de l'avant de la console de siège, et l'autre d'au moins deux premières articulations (30a) étant raccordées à proximité de la partie arrière de la console de siège; au moins deux secondes articulations plus longues (20, 20a) étant plus longues que les premières articulations et coopérant de façon pivotante avec la console de siège, l'une d'au moins les deux secondes articulations (20) étant raccordées de façon pivotante à proximité de l'avant de la console de siège mais décalée vers l'arrière et vers le sommet de la console de siège par rapport au pivot de la première articulation et l'autre d'au moins deux secondes articulation (20a) étant raccordées de façon pivotante à proximité de l'arrière de la console, mais décalées vers l'avant et l'arrière du sommet de la console de siège par rapport au pivot de la première articulation, au moins les deux premières (30, 30a) et secondes (20, 20a) articulations étant reliées entre elles de façon pivotante avec au moins deux troisièmes articulations de compensation (40, 40a) raccordées de façon pivotante à l'avant et à l'arrière du montant, au moins les deux premières articulations (30, 30a) étant reliées entre elles avec au moins deux troisièmes articulations de compensation (40, 40a) à proximité de l'extrémité libre d'au moins deux troisièmes articulations (40, 40a) respectivement, au moins les deux secondes articulations (20, 20a) étant reliées entre elles avec au moins deux troisièmes articulations de compensation (40, 40a) situées entre les extrémités libres d'au moins deux troisièmes articulations de compensation (40, 40a) et les extrémités pivotantes d'au moins deux troisièmes articulations de compensation (40, 40a) raccordées respectivement au montant, au moins deux premières (30, 30a) et secondes (20, 20a) articulations assurant le mouvement longitudinal avant et arrière de la console de siège par rapport au montant, au moins deux troisièmes liaisons de compensation (40, 40a) compensant le mouvement arqué d'au moins deux premières (30, 30a) et seconde articulations (20, 20a) maintenant la console de siège dans une position parallèle sensiblement constante par rapport au montant sur toute la plage de mouvement de la console de siège, de sorte qu'il n'y a pas de mouvement arqué appréciable, mais un mouvement sensiblement linéaire de la console de siège par rapport au montant, le montant comportant des premiers moyens de verrouillage réciproque (R100) pour se verrouiller avec les moyens de verrouillage réciproque de la console de siège sur le premier mouvement longitudinal de la console de siège, la console de siège comportant des seconds moyens de verrouillage réciproque (B100) pour se verrouiller avec des moyens de verrouillage réciproque du montant pendant le mouvement longitudinal de la console de siège, les premiers et seconds moyens de verrouillage réciproque comportant des portions contiguës entre elles (R105,B105), qui permettent normalement le mouvement longitudinal mais sont disposées pour s'engager entre elles et venir en contact lorsque le système est soumis aux contraintes subies au cours d'un accident pour assurer au châssis de véhicule une course directe pour toute force exercée sur le système de siège pendant un accident, tout en réduisant toute force exercée sur les premières (30,30a), secondes (20, 20a) articulations, et articulations de compensation (40, 40a) pendant l'accident.

5. Système selon la revendication 4, caractérisé en ce que les extrémités de dessus d'au moins les deux premières (30, 30a) et secondes (20, 20a) articulations dans l'utilisation se déplacent selon un mouvement arqué vers le haut et vers l'avant pendant le mouvement avant du siège et dans un mouvement arqué vers le bas et vers l'arrière au cours du mouvement vers l'arrière du siège, pour compenser ce mouvement arqué, qui modifierait l'encombrement en hauteur d'un occupant s'il n'était pas compensé, étant donné que le siège se déplace dans sa plage de mouvement longitudinal, au moins les deux troisièmes articulations de compensation (40, 40a) se déplacent dans un mouvement de compensation arqué vers le bas et vers l'avant pendant le mouvement avant du siège et dans un mouvement arqué de compensation vers le haut et vers l'arrière, au cours d'un mouvement vers l'arrière du siège, compensant ainsi le mouvement d'au moins deux premières (30, 30a) et secondes (20, 20a) articulations et maintenant le mouvement de la console de siège par rapport au châssis dans une position parallèle sensiblement constante par rapport au montant sur toute la plage de mouvement de la console de siège de façon à ce qu'il n'y ait pas de mouvement arqué sensible, mais un mouvement sensiblement linéaire de la console de siège par rapport au montant.

6. Système selon la revendication 4 ou 5 caractérisé en ce que le montant comprend de plus des portions dentées solidaires R1, R2, R3) disposées à proximité de son sommet pour fixer la console de siège par rapport au montant en différentes positions dentées, la console de siège comportant des moyens de d'accrochage (50) qui s'engagent de façon amovible dans les portions d'accrochage du montant lorsque le siège est déplacé sur/et à partir des positions de confort alternatives.

7. Système selon la revendication 6, caractérisé en ce que la console de siège et/ou le montant comprennent de plus des portions disposées à proximité du fond de la console de siège et/ou du sommet du montant qui coopèrent entre elles et assurent une résistance aux forces latérales tendant à déplacer la console latéralement par rapport au montant et facilite le guidage de la console par rapport au montant longitudinal.

8. Système selon la revendication 7, caractérisé en ce que les portions sont des collets s'étendant vers le bas (B100) de la console de siège qui entourent le dessus du montant (R105) et facilite de plus le guidage du mouvement longitudinal de la console de siège par rapport au montant.

9. Système selon la revendication 8, caractérisé en ce que lorsqu'ils sont accrochés simultanément, les moyens d'aacrochage s'étendent à travers les ouvertures du montant et sont alignés à travers l'ouverture de la console de siège.

10. Système selon l'une quelconque des revendications 4 à 9, caractérisé en ce que le montant comprend de plus une portion d'accrochage solidaire (P1, P2, P3, P4) à proximité de sa partie inférieure pour fixer le montant, la console de siège et le siège dans l'utilisation sur des portions d'accrochage au plancher.

11. Système selon l'une quelconque des revendications dans lequel les premiers et seconds moyens de verrouillage réciproque sont déplaçables l'un par rapport à l'autre jusqu'à ce qu'une charge soit exercée sur le système.
